# EUROPEAN PATENT SPECIFICATION

(11) **EP 0 405 727 B1**
(45) Date of publication and mention of the grant of the patent: **04.08.1993**
(21) Application number: 90304755.3
(22) Date of filing: 02.05.1990
(51) Int. Cl.: A01F 15/08

(54) **Bale wrapper with tiltable turntable**
Ballenwickler mit kippbarem Drehtisch
Enveloppeur de balles à table tournante pivotable

(30) Priority: 06.05.1989 GB 8910715
(43) Date of publication of application: 02.01.1991
(73) Proprietor: KVERNELAND UNDERHAUG AS, N-4350 Naerbo (NO)
(72) Inventor: Roynberg, Erling, N-4350 Naerbo (NO)
(74) Representative: Orr, William McLean

(56) References cited:
- WO-A-88/03896
- GB-A- 2 159 489
- GB-A- 2 199 012
- US-A- 3 924 765
- US-A- 4 367 062

## Description

This invention relates to a bale wrapper with a tiltable turntable to permit loading and unloading of a cylindrical bale of straw or hay.

It is known to provide a bale wrapper which is used to wrap a continuously supplied stretchable sheet of plastics film around a bale which is supported on spaced-apart rollers on a turntable. and which bale is rotated about its axis as the sheet is wrapped around it. This causes a substantially air-tight wrapping to be formed which envelopes the bale, and protects the bale from the weather so that outside storage is possible without any appreciable deterioration in the nutritional properties of the bale material.

Bale wrappers are used to wrap big bales of straw, and also hay, and in the latter case, by virtue of the tight wrapping which is possible, the hay can be allowed to mature to form hay silage over a period of time during storage in its wrapping.

Usually, the entire outer periphery of the bale is covered with the sheet of stretchable material by reason of the fact that the bale is rotated both about a horizontal axis by the rollers of the turntable, and also about a vertical axis by rotation of the entire turntable and bale about this vertical axis. The sheet of stretchable film is therefore supplied from a dispenser reel mounted at a fixed position on the framework of the bale wrapper.

There are type main types of bale wrapper in use at the present time, namely mobile bale wrappers which can be trailed behind a tractor to be used in a field. and bale wrappers which will be used at a fixed location e.g. in a stackyard.

One known design of trailed bale wrapper, is disclosed in more detail in GB 2159489, to which reference is directed and which has a side mounted pick-up mechanism which enables a newly deposited bale to be automatically engaged by the pick-up mechanism as the bale wrapper is moved forwardly by the trailer, and the mechanism can then be operated to raise the bale from the ground and to deposit it onto the turntable. Wrapping of the bale then takes place, followed by rearward tilting of the turntable in order to deposit the wrapped bale on the ground. This known bale wrapper is a rotatable turntable type bale wrapper with a fixed film reel, but there are other versions of the bale wrapper in which the bale is rotated about its own axis, while a film dispenser is caused to orbit in a horizontal plane around the rotating bale.

There are also other designs of bale wrapper, and particularly stationary bale wrappers, which rely upon the use of a separate piece of equipment to load unwrapped bales onto the turntable, such as a fork lift arrangement or a spike mounted on a tractor.

The present invention is concerned with a rotating turntable type of bale wrapper and which is capable of loading an unwrapped bale onto the turntable, and to unload the bale from the turntable after wrapping, without the need for any separate piece of bale handling equipment.

According to the invention there is provided a round-bale wrapper apparatus which is capable of being mounted on or attached to a propelling vehicle and which comprises:
a main frame which can be coupled to the front or rear of the vehicle;
a sub-frame adjustably mounted on the main frame for movement between a bale-wrapping position and a tipped position;
a turntable mounted on the sub-frame and adapted to receive a round bale thereon, said turntable being operative when the sub-frame is in its bale-wrapping position to rotate the bale about its axis, and then turntable itself with the bale thereon also being rotatable about a substantially vertical axis;
means for mounting a film dispenser reel on one of said frames, whereby in service film can be withdrawn from the reel to be attached to the bale and upon rotation of the bale about its axis and rotation of the turntable the film can be automatically wrapped around the bale; and,
a pick-up mechanism engageable with a bale lying on the ground alongside the apparatus and operative to transfer the bale to the turntable;
characterised in that the sub-frame is movable to the tipped position in a direction transverse to the longitudinal axis of the vehicle to which the apparatus is to be coupled;
in that the pick-up mechanism is mounted on the subframe and is operative, when the sub-frame is moved to its tipped position, to move the bale lying on the ground into engagement with the turntable and to hold the bale against the turntable as the sub-frame is moved to the bale-wrapping position.

Thus, a bale wrapper according to the invention is able to carry out usual bale wrapping operations once the apparatus itself has lifted the bale onto the turntable. The bale wrapper apparatus is therefore particularly useful in the stackyard where wrapped bales are to be stored, though of course the bale wrapper apparatus may be used as a mobile installation operative on bales as they are deposited by a baler in the field.

Preferably, a ground-engageable support foot is mounted on the main frame and is arranged to be operated so as to engage the ground and thereby support the apparatus when the sub-frame is moved to its tipped position.

Thus, upon movement of the sub-frame to the tipped position in order to enable the pick-up mechanism to engage a bale, the support foot is operated so as to engage the ground and thereby provide lateral stability for the apparatus during engagement and initial loading of a bale onto the turntable.

Preferably, the support foot is arranged to,be automatically operated from an inoperative transport or stowed position to a ground-engaging position by a direct mechanical linkage to the sub-frame so that the movement of the sub-frame causes operation of the support foot.

Preferably. the support foot is pivotally mounted on the main frame. and is connected to the sub-frame by means of a toggle linkage which pivots the support foot between a substantially horizontal transport position, and an inclined position in which a support skid of the foot can engage the ground.

A single support foot may be mounted on the main frame at any convenient position e.g. substantially midway along the length of the main frame which faces the bale. However, other arrangements of the support foot may be provided, as desired.

A particularly stable arrangement may be provided by mounting a respective support foot at each corner of the main frame, and this provides both lateral stability during loading and unloading of bales, and also provides a degree of longitudinal stability.

By virtue of the arrangement of one or more support foot on the main frame, the apparatus can be supported via its mounting on the vehicle, e.g. trailer, and does not need to be raised or lowered in order that bale loading and unloading operations can take place, since it is only necessary to operate the support foot between its transport and ground-engaging positions.

The support foot arrangement is particularly suitable in enabling the apparatus to be mounted at the rear of a tractor on the usual three point linkage, and the support foot gives support from the ground thereby avoiding application of any undue sideways twisting action on the linkage arms of the tractor during loading and unloading.

Furthermore, with the side loading and unloading of bales which is possible with the apparatus, while attached to the rear of a tractor, it is possible for the driver of the tractor to move forwardly alongside and then beyond the bale, and then to operate the apparatus to load the bale, wrap it, and then unload it, and then the tractor can continue forward motion in the same direction to pick-up and then wrap the next successive bale lying on the ground in a row on the field, without the need to change direction laterally.

In addition, the automatically operating support leg has the advantage that the operator of the tractor does not have to raise and lower the three point linkage of the tractor, so that the apparatus can be suspended above the ground with a suitable clearance during the entire process i.e. moving from bale to bale, loading, wrapping and unloading.

The pick-up mechanism may comprise an arm pivotally mounted on an upstanding portion of the sub-frame and having a transverse bale-engaging member at its free end, the arm being movable between a bale-receiving position and a bale-holding position. Then, upon tipping of the sub-frame and with the arm in its bale-receiving position, the arm can be lowered over and partly around the bale, and upon movement of the arm to its holding position, the arm can move and then hold the bale against the turntable.

The arm may be pivoted between its two positions by a ram or other suitable arrangement.

If for safety reasons it may be desirable to provide an entirely captive engagement of the pick-up mechanism with a bale, the pick-up mechanism may comprise a cradle which can fit over and around a bale, such cradle being pivotally mounted on the sub-frame in similar manner as the pick-up arm just referred to.

Once a bale has been wrapped, it can then be unloaded using the pick-up mechanism to hold the wrapped bale while the turntable is tipped, and then release of the wrapped bale by the pick-up mechanism will allow the bale to roll gently under gravity onto the ground, or onto any stacked position.

The main frame may be a wheel-supported frame, if it should be desired to provide a bale wrapper apparatus which can be towed behind a tractor. However, it is preferred that the main frame has suitable rigid mounting points which will enable the main frame to be coupled rigidly to the usual three point hitch at the rear of a tractor, or to be front mounted on the tractor e.g. by attachment to a front mounted lift arm arrangement. In this latter case, the entire bale wrapper apparatus can be raised with a wrapped bale thereon, and then following tilting of the sub-frame the wrapped bale can roll under gravity onto the top of a growing stack of wrapped bales.

Preferably, a stand for mounting a film reel dispenser is carried by the main frame, and therefore the reel will not be tilted (and risk falling off its mounting) when the sub-frame is tilted. An automatically acting cutter arrangement may be provided to cut the length of film running between a wrapped bale and the reel when the sub-frame is tilted.

The turntable may comprise laterally spaced and parallel rollers onto which a round bale can be supported for rotation, and at least one of the rollers may have a brake mechanism operative to brake the roller when the sub-frame is tilted and thereby control the tendency for the wrapped bale to roll-off the turntable prematurely as the sub-frame commences its tilting movement.

The turntable may have a ring gear drive mechanism operative to rotate the turntable about its vertical axis, and preferably the arrangement will be such that the turntable is lined-up with the axes of the rollers extending substantially parallel to the general longitudinal axis of the tractor. The sub-frame can then load or unload a bale by moving the bale in a direction transverse to this axis, and this therefore enables the driver of the tractor readily to view the progress of the operation.

A spring-loaded latch mechanism may be provided to engage the ring gear and thereby hold the turntable in a required predetermined attitude about its axis of rotation while the sub-frame is tipped, and this mechanism may be automatically disabled as the sub-frame returns to its bale-receiving position by engagement with an actuator pad or the like on the main frame with a pivot arm of the latch mechanism.

Embodiments of bale wrapper apparatus according to the invention will now be described in detail, by way of example only, with reference to the accompanying drawings, in which:
Figure 1 is a rear view of a first embodiment of bale wrapper apparatus according to the invention, and showing initial engagement with a round bale lying on the ground;
Figure 2 shows an intermediate stage in the operation of loading the bale onto the apparatus;
Figure 3 shows the bale fully loaded on the apparatus and ready to undergo a bale wrapping operation;
Figure 4 is a plan view of the bale wrapper apparatus;
Figure 5 is a plan view of the apparatus mounted on a three point linkage at the rear of a tractor;
Figure 6 is a rear view of the apparatus attached to the tractor;
Figure 7 is a side view of an automatically operating support foot which can engage the ground and support the apparatus when the latter is tilted to a bale-engaging position, the foot being shown in an inoperative position;
Figure 8 shows the support foot in a partly unfolded form; and,
Figure 9 shows the support foot in a fully unfolded form and engaging the ground so as to support the apparatus.

A round-bale wrapper apparatus according to the invention is capable of being mounted on or attached to a propelling virtue, such as a tractor, and may be provided with a turntable of known construction which is capable of receiving a round bale thereon, and which is operative to rotate the bale about its axis while the turntable itself with the bale thereon is rotated about a substantially vertical axis. The turntable and roller design may be in accordance with that known from the Silawrap machine made by Underhaug, and as disclosed, for example, in more detail in British Patent No 2159489B.

A film dispenser reel is mounted on the apparatus, and in service the film can be withdrawn from the reel to be attached to the bale, and upon rotation of the bale about its axis and rotation of the turntable about its axis, the film can be automatically wrapped around the bale.

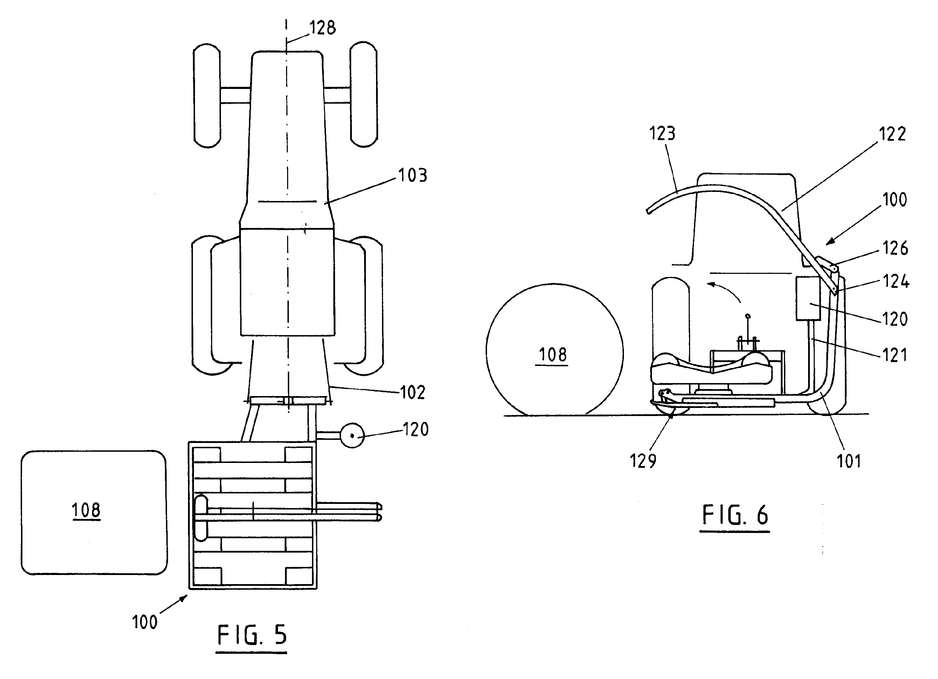

Referring now to the drawings, an embodiment of bale wrapper apparatus according to the invention will now be described, and which is designated generally by reference 100. The apparatus 100 has a main frame 101 which is securable to a rear mounted three point hitch 102 of a tractor 103, as shown in Figures 5 and 6, or which may be rigidly mounted at the front of a tractor, (in a manner not shown).

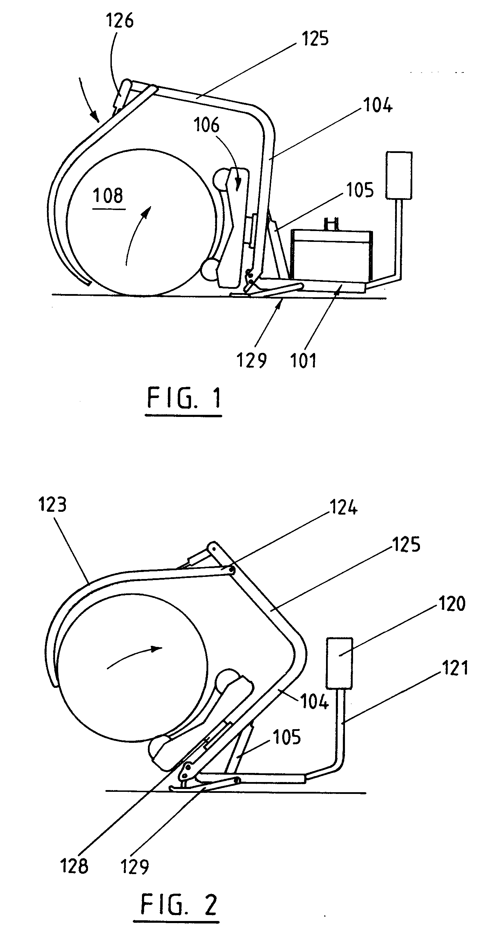

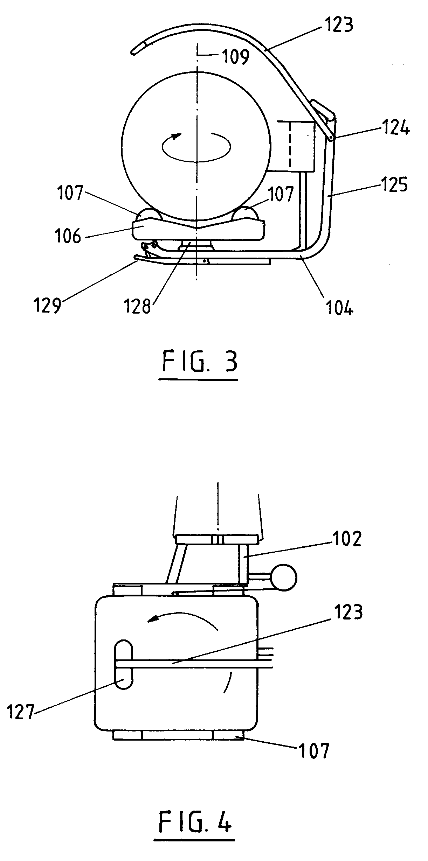

A sub-frame 104 is adjustably mounted on the main frame 101 for movement between a bale-wrapping position, as shown in Figure 3, and a tipped position as shown in Figure 1. A ram 105 interconnects the main frame 101 and sub-frame 104, and is operative to tilt the sub-frame 104 between its two positions.

A turntable 106 having spaced apart rollers 107 is mounted on the sub-frame 104, and is operative when the sub-frame is in the bale wrapping position shown in Figure 3 to rotate a round bale 108 about its own axis while the turntable itself with the bale thereon is rotated about a substantially vertical axis 109.

A film dispenser reel 120 is mounted on one of the frames which, in the illustrated embodiment, will be the main frame 101, via a suitable support 121, and a length of film can be withdrawn from the reel to engage the bale 108, when in the position shown in Figure 3, to enable bale wrapping to take place.

A pick-up mechanism designated generally by reference 122 is mounted on the sub-frame 104 and is operative, when the sub-frame 104 is moved to its tipped position shown in Figure 1, to engage the bale 108 lying on the ground and to move the bale into engagement with the turntable 106 and to hold the bale on the turntable as the sub-frame 104 is moved to its horizontal bale-wrapping position shown in Figure 3.

The pick-up mechanism 122 comprises an arm 123 which is pivotally mounted via a pivot 124 on an upstanding portion 125 of the sub-frame 104, and a ram 126 is operative to pivot the arm 123 between an open bale receiving and release position, as shown in Figure 3, and a bale-holding position as shown in Figures 1 and 2. Thus, upon tipping of the sub-frame 104 (assuming no bale is mounted thereon) from its position shown in Figure 3 to the position shown in Figure 1, and with the arm 123 in its bale receiving position, the arm 123 can be lowered over and partly around the bale. Then, upon movement of the arm to its holding position, the arm can move and then hold the bale 108 firmly against the turntable 106, and the latter is then tipped to the horizontal bale-wrapping position shown in Figure 3. At the free end of the pick-up arm 123 there is provided a transverse bale engaging member 127, as shown in Figure 4.

Once the bale has been wrapped, when in the position shown in Figure 3, it can then be unloaded using the pick-up arm 123 to hold the wrapped bale initially while the turntable 104 is tipped, and then release of the wrapped bale by the arm 123 can allow the wrapped bale to roll gently under gravity onto the ground.

The illustrated embodiment is designed to be rigidly mounted behind or in front of a tractor, via suitable rigid mounting points provided on the main frame, though the main frame may be a wheel supported frame, if it should be desired to provide a bale wrapper apparatus which can be towed behind a tractor.

The film dispenser reel 102 is mounted on a stand carried by support 121, and therefore the reel is not tilted when the sub-frame 104 is moved to its tilted position. An automatically acting cutter arrangement (not shown) may be provided to cut the length of film running between a wrapped bale and the reel 120 whenever the sub-frame is tilted.

The turntable rollers 107 are laterally spaced apart from each other and extend parallel to each other, and a locking mechanism (not shown) may be provided to prevent the rollers from rotating when the sub-frame is tilted and thereby to control any tendency for a wrapped bale to roll off the turntable 106 prematurely as the sub-frame is tilted.

A ring gear drive mechanims, shown schematically by reference 128, is operative to rotate the turntable 106 about a substantially vertical axis, when in the bale wrapping position shown in Figure 3, and the turntable will normally be lined-up with the axes of the rollers 107 extending parallel to the general longitudinal axis 128 of the tractor (see Figure 5), whereby the sub-frame can load and unload a bale by moving the bale in a direction perpendicular to this axis, which will enable the driver of the tractor readily to control and to view the progress of the operation.

A spring loaded latch mechanism may be provided (not shown) to engage the ring gear 128 and thereby hold the turntable in any required predetermined attitude while the sub-frame 104 is tipped, and this mechanism may be automatically disabled as the sub-frame 104 is returned to its bale-wrapping position by engagement with an actuator on the main frame 101 which engages with a pivot arm of the latch mechanism.

The embodiment shown has a pick-up mechanism which comprises a single pick-up arm 123, as shown in Figure 4, but an alternative arrangement (not shown) may comprise a U-shaped cradle which can engage around and hold captive the upper portion of a bale. This may provide additional security against a heavy bale coming out of engagement with the pick-up mechanism, or the turntable, in the event that the bale wrapper apparatus, or a bale to be loaded and unloaded, is lying on uneven ground.

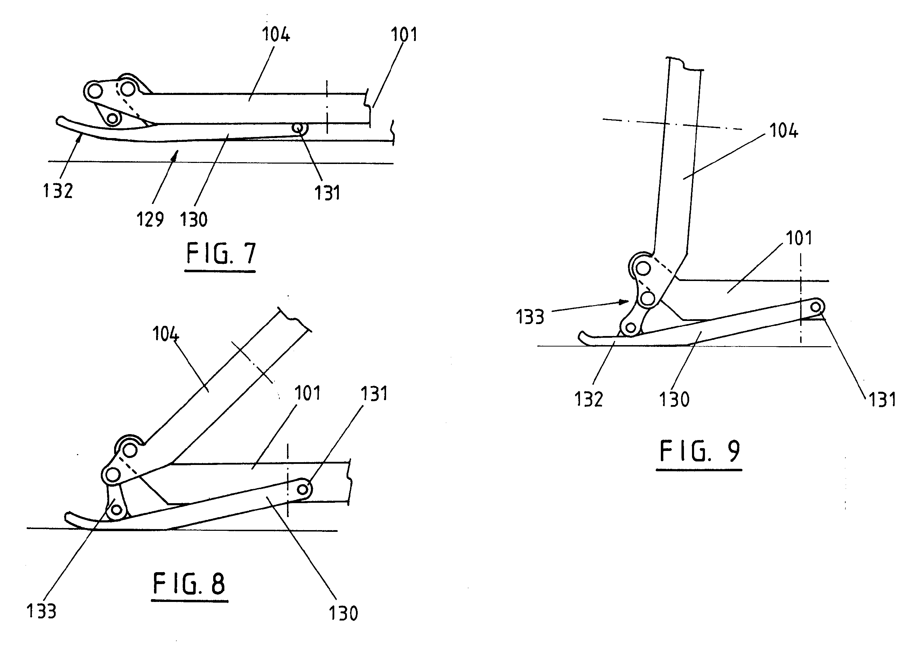

Referring now to Figures 7 to 9, there is shown in more detail a ground-engageable support foot which is mounted on the main frame 101, and which is arranged to be operated so as to engage the ground and thereby support the apparatus when the sub-frame 104 is moved to its tipped position. The support foot is designated generally by reference 129, in Figures 1 to 6, but is shown in more detail and to an enlarged scale in Figures 7 to 9.

Upon movement of the sub-frame 104 from its horizontal position shown in Figures 3, 4, 5 and 6, to the tilted position shown in Figure 1, the support foot 129 is automatically operated so as to engage the ground and thereby provide lateral stability for the apparatus during engagement and initial loading of a bale 108 onto the turntable 106. The support foot 129 is automatically operated from an inoperative transport or stowed position, as shown in Figure 7, to a ground engaging position, as shown in Figure 9, by a direct mechanical linkage to the sub-frame 104 so that the movement of the sub-frame itself causes operation of the support foot.

The support foot 129 comprises a pivot link 130 pivotally mounted at 131 on the main frame 101, and having a ground-engaging skid 132. To cause automatic pivoting of the link 130 from the transport position shown in Figure 7 and through the partly unfolded position shown in Figure 8 to the fully unfolded and ground engaging position shown in Figure 9, a toggle linkage 133 connects the skid 132 to the sub-frame 104.

The support foot 129 can be mounted on the main frame 101 at any convenient position in order to provide ground-engaging support for the apparatus, when in the tilted position, and during loading and unloading of a bale, and may therefore be mounted substantially midway along the length of the main frame 101 which faces the bale 108. Alternatively, a pair of support feet may be arranged, one at each left hand corner (as viewed in plan) of the main frame which faces laterally towards the bale.

The illustrated embodiment of automatic support leg is therefore particularly useful for mounting a rotating turntable type bale wrapper apparatus on the rear three point linkage of a tractor, and the support foot gives support from the ground, during tilting of the apparatus to the bale engaging position, and also during initial loading and unloading of a bale. This therefore reduces significantly the application of twisting action on the linkage arms of the tractor. In addition, the driver of the tractor can steer the tractor in a forward direction, while moving quite close to the bale from one side, can then load the bale, wrap it and then unload it, and then continue in the same forward direction to the next bale lying on the ground, without reversing, or changing direction.

Furthermore, the automatically operating support leg has the advantage that the driver does not have to raise and lower the link arms of the tractor, in that the apparatus can hang with a suitable clearance above the ground during the entire process i.e. during moving from bale to bale, and during loading, wrapping and unloading.

It should be understood that an agricultural tractor is only one example of a propelling vehicle to which the bale wrapping apparatus of the invention may be coupled, and that other vehicles may be used, such as fork-lift trucks.

## Claims

1. A round-bale wrapper apparatus (100) which is capable of being mounted on or attached to a propelling vehicle (103) and which comprises:
a main frame (101) which can be coupled to the front or rear of the vehicle;
a sub-frame (104) adjustably mounted on the main frame (101) for movement between a bale-wrapping position and a tipped position;
a turntable (106) mounted on the sub-frame (104) and adapted to receive a round bale (108) thereon, said turntable being operative when the sub-frame (104) is in its bale-wrapping position to rotate the bale about its axis, and then turntable itself with the bale thereon also being rotatable about a substantially vertical axis (109);
means for mounting a film dispenser reel (120) on one of said frames (101, 104), whereby in service film can be withdrawn from the reel to be attached to the bale and upon rotation of the bale about its axis and rotation of the turntable the film can be automatically wrapped around the bale; and,
a pick-up mechanism (123) engageable with a bale (108) lying on the ground alongside the apparatus and operative to transfer the bale to the turntable (106);
characterised in that the sub-frame (104) is movable to the tipped position in a direction transverse to the longitudinal axis (128) of the vehicle to which the apparatus is to be coupled; and,
in that the pick-up mechanism (123) is mounted on the sub-frame (104) and is operative, when the sub-frame is moved to its tipped position, to move the bale lying on the ground into engagement with the turntable (106) and to hold the bale against the turntable as the sub-frame (104) is moved to the bale-wrapping position.

2. Apparatus according to claim 1, characterised in that a ground-engageable support foot (129) is mounted on the main frame (101) and is arranged to be operated so as to engage the ground and thereby support the apparatus (100) when the sub-frame (104) is moved to its tipped position.

3. Apparatus according to Claim 2, characterised in that the support foot (129) is arranged to be automatically operated from an inoperative transport or stowed position to a ground-engaging position by a direct mechanical linkage (132) to the sub-frame (104) so that the movement of the sub-frame causes operation of the support foot (129).

4. Apparatus according to Claim 3, characterised in that the support foot (130) is pivotally mounted via pivot (131) on the main frame (101), and is connected to the sub-frame (104) by means of a toggle linkage (132) which pivots the support foot (130) between a substantially horizontal transport position, and an inclined position in which a support skid (133) of the foot (130) can engage the ground.

5. Apparatus according to any one of Claims 1 to 4, including a respective support foot (130) mounted at each end of one side of the main frame (101) located adjacent to a pivotal mounting of the sub-frame (104) on the main frame (101).

6. Apparatus according to any one of Claims 1 to 5, characterised in that the pick-up mechanism (123) comprises an arm mounted via a pivot (124) on an upstanding portion (125) of the sub-frame (104), and having a transverse bale-engaging member (127) at its free end, the arm (123) being movable between a bale-receiving position and a bale-holding position.

7. Apparatus according to Claim 6, characterised by a ram (126) operative to pivot the arm (123) between its two positions.

8. Apparatus according to any one of Claims 1 to 7, characterised by a stand (121) for mounting the film reel dispenser (120) and which is carried by the main frame (101).

9. Apparatus according to any one of Claims 1 to 8, characterised in that the sub-frame (104) is pivotally mounted on the main frame (101), and a ram (105) interconnects the main frame (101) and the sub-frame (104) and is operative to pivot the sub-frame (104) between its bale-wrapping position and its tipped position.

## Patentansprüche

1. Wickler (100) für runde Ballen, der an einem Antriebsfahrzeug (103) montiert oder befestigt werden kann, und umfaßt;
einen Hauptrahmen (101), der an die Vorder- oder Rückseite des Fahrzeugs gekoppelt werden kann;
einen Unterrahmen (104), der einstellbar am Hauptrahmen (101) so montiert ist, daß er sich zwischen einer zum Einwickeln der Ballens geeigneten Position und einer verkippten Position bewegen kann;
einen Drehtisch (106), der an dem Unterrahmen (104) montiert ist und so ausgestaltet ist, daß er einen runden Ballen (108) aufnehmen kann und den Ballen um seine Achse verdreht, wenn sich der Unterrahmen (104) in seiner zum Einwickeln des Ballens geeigneten Position befindet, und der selbst zusammen mit dem Ballen ebenfalls um eine im wesentlichen senkrechte Achse (109) verdreht werden kann;
einer Einrichtung zur Montage einer Folien-Abgabehaspel (120) an einem der Rahmen (101, 104), wodurch im Betrieb eine Folie von der Haspel abgezogen, an dem Ballen befestigt und bei der Drehung des Ballens um seine eigene Achse und der Drehung des Drehtisches automatisch um den Ballen gewickelt werden kann;
einem Aufnahmemechanismus (123), der einen auf dem Boden neben der Vorrichtung liegenden Ballen (108) ergreifen und zum Drehtisch (106) überführen kann;
dadurch gekennzeichnet,
daß der Unterrahmen (104) in einer Richtung quer zur Längsachse (128) der Fahrzeuges, an welchen die Vorrichtung gekoppelt werden soll, in die verkippte Stellung bewegbar ist, und
daß der Aufnahmemechanismus (123) an dem Unterrahmen (104) montiert ist und den auf dem Boden liegenden Ballen in Eingriff mit dem Drehtisch (106) bringt, wenn der Unterrahmen in seine verkippte Stellung bewegt wird, und den Ballen gegen den Drehtisch hält, wenn der Unterrahmen (104) in die zum Einwickeln des Ballens geeignete Position bewegt wird.

2. Vorrichtung nach Anspruch 1, dadurch gekennzeichnet, daß ein sich am Boden abstützender Tragfuß (129) an dem Hauptralmen (101) montiert und so eingerichtet ist, daß er den Boden berührt und hierdurch die Vorrichtung (100) abstützt, wenn der Unterrahmen (104) in seine verkippte Position bewegt ist.

3. Vorrichtung nach Anspruch 2, dadurch gekennzeichnet, daß der Tragfuß (129) automatisch aus einer inaktiven Transport- oder Stau-Position in eine den Boden berührende Position durch eine direckte mechanische Verbindung (132) mit dem Unterrahmen (104) gebracht wird, derart, daß eine Bewegung des Unterrahmens zu einer Betätigung des Tragfußes (129) führt.

4. Vorrichtung nach Anspruch 3, dadurch gekennzeichnet, daß der Tragfuß (130) über einen Colenkzapfen (131) am Hauptrahmen (101) gelenkig montiert und mit dem Unterrahmen (104) über ein Kniehebelgestänge (132) verbunden ist, welches den Tragfuß (130) zwischen einer im wesentlichen horizontalen Transportposition und einer geneigten Position verschwenkt, in welcher eine Tragkufe (133) des Fußes (130) den Boden berühren kann.

5. Vorrichtung nach einem der Ansprüche 1 bis 4 mit einem entsprechenden Tragfuß (130) an jedem Ende einer Seite des Hauptrahmens (101), welche der Gelenkverbindung des Unterrahmens (104) am Hauptrahmen (101) benachbart ist.

6. Vorrichtung nach einem der Ansprüche 1 bis 5, dadurch gekennzeichnet, daß der Aufnahmemechanismus (123) einen Arm umfaßt, der über einen Gelenkzapfen (124) an einem hervorstehenden Abschnitt (125) des Unterrahmens (104) montiert ist und an seinem freien Ende ein quer verlaufendes, am Ballen angreifendes Teil (127) aufweist, wobei der Arm (123) zwischen einer zur Aufnahme des Ballens geeigneten Position und einer zum Festhalten des Ballens geeigneten Position beweglich ist.

7. Vorrichtung nach Anspruch 6, gekennzeichnet durch einen Kolben (126), welcher den Arm (123) zwischen seinen beiden Positionen verschwenkt.

8. Vorrichtung nach einem der Ansprüche 1 bis 7, gekennzeichnet durch einen Ständer (121), an welchem die Folien-Abgabehaspel montiert ist und welcher von dem Hauptrahmen (101) gehalten ist.

9. Vorrichtung nach einem der Ansprüche 1 bis 8, dadurch gekennzeichnet, daß der Unterrahmen (104) gelenkig am Hauptrahmen (101) montiert ist und daß ein Kolben (105) den Hauptrahmen (101) mit dem Unterrahmen (104) verbindet und den Unterrahmen (104) zwischen der zum Einwickeln des Ballens geeigneten Position und der verkippten Position verschwenkt.

## Revendications

1. Appareil enveloppeur de balles (100) pouvant être monté sur ou attaché à un véhicule tracteur (103) et comprenant :
- un bâti principal (101) pouvant être couplé à l'avant ou à l'arrière du véhicule ;
- un bâti auxiliaire (104) monté de façon ajustable sur le bâti principal (101) de façon à pouvoir prendre une position d'enveloppement des balles et une position basculée ;
- une table tournante (106) montée sur le bâti auxiliaire (104) et conçue pour accueillir une balle ronde (108), ladite table tournante étant mise en oeuvre lorsque le bâti auxiliaire (104) est dans sa position d'enveloppement des balles afin de faire tourner la balle selon son axe, la table tournante et la balle présente sur celle-ci pouvant elles-mêmes être mises en rotation selon un axe essentiellement vertical (109) ;
- des moyens de montage d'un dévidoir de films (120) sur l'un desdits bâtis (101, 104), le film pouvant être, lors de l'utilisation, extrait du dévidoir et attaché à la balle puis, sous l'effet de la rotation de la balle selon son axe et de la rotation de la table tournante, enroulé automatiquement autour de la balle, et;
- un mécanisme de prélèvement (123) pouvant coopérer avec la balle (108) reposant sur le sol à côté de l'appareil et permettant de transférer la balle sur la table tournante (106) ;
caractérisé en ce que le bâti auxiliaire (104) peut être placé en position basculée selon une direction transversale par rapport à l'axe longitudinal (128) du véhicule auquel l'appareil est couplé ; et en ce que,
le mécanisme de prélèvement (123) est monté sur le bâti auxiliaire (104), et est mis en oeuvre lorsque le bâti auxiliaire est placé dans sa position basculée, pour faire coopérer la balle reposant sur le sol avec la table tournante (106) et pour maintenir la balle contre la table tournante lorsque le bâti auxiliaire (104) est placé dans la position d'enveloppement de la balle.

2. Appareil selon la revendication 1, caractérisé en ce qu'un pied (129) pouvant être fixé dans le sol est monté sur le bâti principal (101), ledit pied étant conçu pour coopérer avec le sol et ainsi supporter l'appareil (100) lorsque le bâti auxiliaire (104) est placé dans sa position baxculée.

3. Appareil selon la revendication 2, caractérisé en ce que le pied (129) est conçu pour passer d'une position non opérationnelle de transport ou d'arimage dans une position dans laquelle il coopère avec le sol, grâce à une liaison mécanique directe avec le bâti auxiliaire (104), de sorte que le mouvement du bâti auxiliaire provoque la mise en oeuvre du pied (129).

4. Appareil selon la revendication 3, caractérisé en ce que le pied (130) est monté pivotant grâce à un pivot (131) sur le bâti principal (101), et est connecté au bâti auxiliaire (104) par une liaison à bascule (132) qui permet de faire pivoter le pied (130) entre une position de transport essentiellement horizontale et une position inclinée dans laquelle un patin de support (133) du pied (130) coopère avec le sol.

5. Appareil selon l'une quelconque des revendications 1 à 4, comprenant un pied (130) à chaque extrémité d'un côté du bâti principal (101) situé près des moyens de pivotement du bâti auxiliaire (104) par rapport au bâti principal (101).

6. Appareil selon l'une quelconque des revendications 1 à 5, caractérisé en ce que le mécanisme de prélèvement (123) comprend un bras monté par un pivot (124) sur une partie droite (125) du bâti auxiliaire (104), et présentant un élément (127) d'engagement transversal de la balle au niveau de son extrémité libre, le bras (123) étant monté mobile entre une position de réception de la balle et une position de maintien de la balle.

7. Appareil selon la revendication 6 caractérisé en ce qu'il comprend un piston (126) mis en oeuvre pour faire pivoter le bras (123) dans ses deux positions.

8. Appareil selon l'une quelconque des revendications 1 à 7 caractérisé en ce qu'il comprend un support (121) pour accueillir le dévidoir de film (120), ledit support étant monté sur le bâti principal (101).

9. Appareil selon l'une quelconque des revendications 1 à 8 caractérisé en ce que le bâti auxiliaire (104) est monté pivotant sur le bâti principal (101), un piston (105) reliant le bâti principal (101) et le bâti auxiliaire (104), ledit piston permettant de faire pivoter le bâti auxiliaire (104) entre sa position d'enveloppe ment des balles et sa position basculée.
